# NEUE EUROPÄISCHE PATENTSCHRIFT

(11) **EP 0 286 853 B2**
(45) Veröffentlichungstag und Bekanntmachung des Hinweises auf die Entscheidung über den Einspruch: **15.07.1998**
(45) Hinweis auf die Patenterteilung: 13.10.1993
(21) Anmeldenummer: 88104129.7
(22) Anmeldetag: 15.03.1988
(51) Int. Cl.: A43B 7/12

(54) **Verfahren zur Abdichtung von Schuhen im Sohlenbereich**
Method for sealing shoes in the sole region
Procédé pour rendre étanche des chaussures au niveau de la semelle

(30) Priorität: 15.04.1987 DE 3712901
(43) Veröffentlichungstag der Anmeldung: 19.10.1988
(73) Patentinhaber: W.L. Gore & Associates GmbH, 85636 Putzbrunn (DE)
(72) Erfinder: Hübner, Thorger, D-8208 Kolbermoor (DE); Bleimhofer, Walter, D-8122 Penzberg (DE)
(74) Vertreter: Klunker . Schmitt-Nilson . Hirsch

(56) Entgegenhaltungen:
- EP-A- 0 080 710
- DE-A- 1 928 882
- DE-A- 2 106 984
- DE-U- 8 206 861
- FR-A- 2 314 681
- FR-A- 2 550 065
- GB-A- 1 228 172
- US-A- 4 599 810

## Beschreibung

Die Erfindung betrifft ein Verfahren zur wasserundurchlässigen Abdichtung der Verbindungszone zwischen einem wasserdichten Schuhschaft mit Zwickeinschlag und einem Brandsohlenbereich des Schuhs mittels einer Schicht aus wasserdichtem Material, die mit Hilfe einer Spritzform auf die Verbindungszone aufgespritzt wird.

In neuerer Zeit sind Schuhe hergestellt worden, deren Schuhschaft aus wasserundurchlässigem und dabei vorzugsweise dampfdurchlässigen Material besteht. Es bestehen Schwierigkeiten, eine wasserdichte Verbindung zwischen dem Schuhschaft und der daran anzubringenden Laufsohle herzustellen.

Bei dem bekannten AGO-Verfahren wird der Schuhschaft mit einem Klebezwickverfahren mit der Brandsohle verklebt und auf diese verklebte Einheit eine Sohle aufgebracht, die eine Zwischensohle oder direkt die Laufsohle sein kann. Schwachstelle bei dieser Lösung sind die Klebestellen zwischen Brandsohle und Schuhschaft, da der Kleber entweder von vornherein nicht den gesamten Übergangsbereich zwischen Schuhschaft und Brandsohle abdichtet oder durch Beigebeanspruchungen bei der Schuhbenutzung brüchig und damit wasserdurchlässig werden kann.

Um dieses Problem zu überwinden, hat man gemäß US-A-4 599 810 bei einem Schuh herkömmlichen Aufbaus und mit an den Schaft angenähter Gummisohle die Einheit aus Schuhschaft und damit verklebter Brandsohle mit einem sockenartigen Einsatz aus wasserdichtem, dampfdurchlässigem Material ausgekleidet. Um die erforderliche Form des Einsatzes zu erhalten, muß er vernäht und an den Nahtstellen heiß verschweißt werden. Dieses Verfahren ist nicht nur aufwendig und entsprechend teuer sondern führt auch zu Problemen deswegen, weil der Einsatz zu Faltenneigung und Verwerfungen neigt.

Weiterhin ist es aus den Druckschriften DE-A-19 28 882 und DE-A-21 06 984 bekannt, den mit einer Brandsohle vernähten Bereich eines gestrobelten Schuhschaftes mit einer PU-(Polyurethan-)Laufsohle zu umspritzen. Hierzu benötigt man eine zweigeteilte Spritzform, die von beiden Seiten an den Schuhschaft herangeführt wird. Diese Spritzform ist relativ teuer. Aufgrund der hohen Formkosten sind die Schuhhersteller auf sehr wenige Sohlenformen beschränkt. Außerdem lassen sich mit solchen angespritzten Laufsohlen keine Schuhe eleganten Aussehens erzielen.

Die GB-A-1 228 172 zeigt ein Verfahren zum Anspritzen von Laufsohlen aus verflüssigbarem Material, welches mit Hilfe einer Spritzform auf die Verbindungszone zwischen einem Schuhschaft und dem Brandsohlenbereich des Schuhs aufgespritzt wird. An die Unterseite des mit der Brandsohle verbundenen Schuhschaftes wird eine einteilige Spritzform angesetzt, die eine seitlich zur Schaftseitenwand vorstehende Dichtlippenanordnung aufweist, welche die Oberseite der angespritzten Laufsohle übergreift. Damit diese einteilige Spritzform trotzdem von der angespritzten Laufsohle abziehbar ist, besteht sie aus einem elastischen Material.

Der Erfindung liegt die Aufgabe zugrunde, ein Verfahren verfügbar zu machen, mittels welchem bei Verwendbarkeit beliebiger Laufsohlen eine auch über eine lange Benutzungszeit zuverlässig wasserdichte Verbindung zwischen Schuhschaft und Brandsohlenbereich gewährleistet wird.

Die Lösung dieser Aufgabe ist im Patentanspruch 1 angegeben und kann den Unteransprüchen gemäß vorteilhaft weitergebildet werden.

Für das erfindungsgemäße Verfahren kann eine relativ einfache Spritzform eingesetzt werden. Es genügt ein Spritzstempel, der mit einer hochstehenden Dichtlippe versehen ist, deren Verlauf in etwa der Kontur der Brandsohle entspricht. Da es auf die exakte Ansatzlinie der Dichtlippe an dem mit der Brandsohle versehenen Schuhschaft nicht ankommt, kann diese Form für eine große Anzahl unterschiedlich bemessener Schuhe verwendet werden.

Vorzugsweise verläuft die Kontur der Dichtlippe von dem Außenrand des Schuhschaftes nach innen versetzt. Auf die erfindungsgemäß aufgespritzte Schicht kann dann eine beliebige Laufsohle aufgebracht werden. Die aufgespritzte Schicht braucht dann nicht mehr sichtbar zu sein, so daß die ästhetische Erscheinung des Schuhs durch eine solche Schicht nicht beeinträchtigt zu werden braucht.

Vorzugsweise besteht die Schicht aus Polyurethan, das zum Aufspritzen verflüssigt und mit einem Druck von vorzugsweise 3 bis 5 at aufgespritzt wird. Dieser Druck stellt sicher, daß das flüssige Material in den abzudichtenden Bereich zwischen Brandsohle und Schuhschaft eindringt und diese Verbindung wasserdicht macht.

Um den Schuhschaft wasserdicht zu machen, ist mindestens ein Teil, vorzugsweise der gesamte Schuhschaft mit wasserdichtem Material ausgekleidet, das vorzugsweise dampfdurchlässig ist. Hierfür eignen sich beispielsweise eine Folie aus gerecktem Polytetrafluoräthylen (PTFE), eine Polyestermembran oder eine mikroporöse Polyurethan-Beschichtung.

Im folgenden wird die Erfindung anhand von Ausführungsformen näher erläutert. In den Zeichnungen zeigen:
- Fig. 1: eine schematische Vertikalschnittansicht eines mit einer Brandsohle verklebten Schuhschaftes mit daran angesetzter Spritzform und der damit erzeugten Dichtungsschicht wobei die Spritzform nach dem Spritzprozeß bereits von der Dichtungsschicht weggezogen ist; und
- Fig. 2: eine schematische Darstellung eines mit einer Brandsohle verklebten Schuhschaftes und einer daran angesetzten Spritzform.

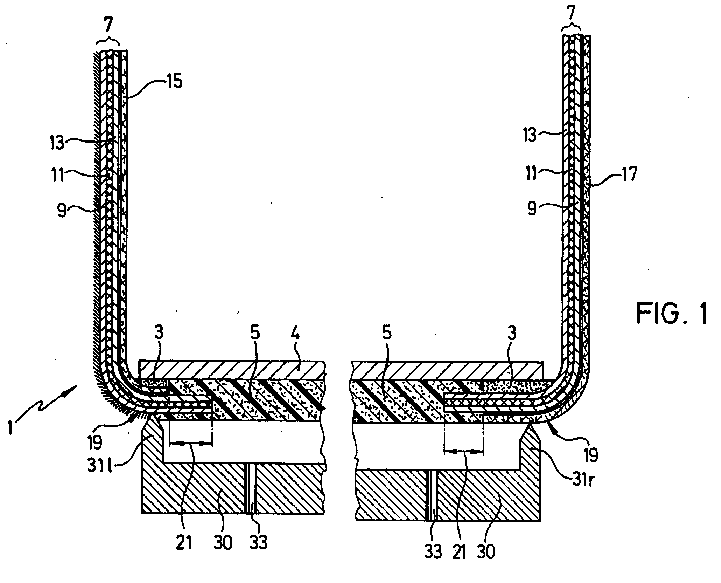

Fig. 1 zeigt einen Schuhschaft 1, der mittels eines Zwickklebers 3 mit einer Brandsohle 4 verklebt ist. Der Schuhschaft 1 kann aus unterschiedlichen Materialien bestehen. In Fig. 1 sind zwei Möglichkeiten dargestellt. Die linke Seite zeigt einen Schuhschaft, der aus einem Laminat 7 mit einer Außenschicht 9, einer Mittelschicht 11 aus einer wasserundurchlässigen, dampfdurchlässigen Membran und einer Innenschicht 13 besteht. Auf der Innenseite kann das Laminat 7 mit einem Futter 15 ausgekleidet sein.

Die rechte Seite von Fig. 1 zeigt eine Ausführungsform eines Schuhschaftes, der eine Außenschicht 17, beispielsweise aus Leder, aufweist, die mit einem als Futter dienenden Laminat ausgekleidet ist, das wiederum eine wasserundurchlässige, dampfdurchlässige Membran enthält.

Der Zwickeinschlag 19 weist einen losen Endbereich 21 auf, der nicht mit der Brandsohle 4 verklebt ist.

Bei der in Fig. 1 links gezeigten Ausführungsform wird im Zwickeinschlag das Futter 15 vorzugsweise kürzer gemacht als das Laminat 7 und nur der mit Futter 15 versehene Bereich des Laminats 7 an der Brandsohle 4 festgeklebt. Der über das Futter überstehende Bereich des Laminats 7 bildet den losen Teil des Zwickeinschlages 19.

Bei der in Fig. 1 rechts dargestellten Ausführungsform weist die Außenschicht 17 im Bereich des Zwickeinschlages 19 eine kürzere Länge auf als das auf die Außenschicht 17 aufgebrachte Laminat 7. Nach dem Verkleben des Schuhschaftes 1 mit der Brandsohle 4 bleibt der vordere Endbereich 21 des Laminats 7 mit der Brandsohle 4 unverbunden.

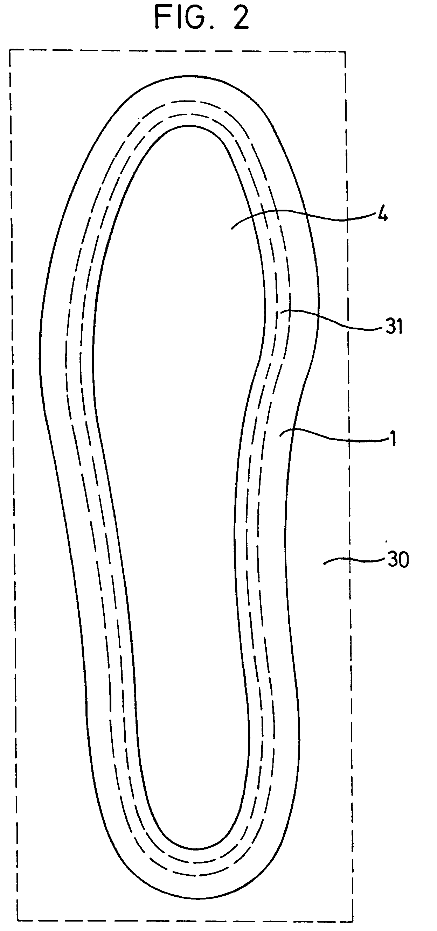

Fig. 1 zeigt außerdem schematisch eine von einer angespritzten Dichtungsschicht zur Verdeutlichung weggezogene Spritzform 30 mit einer in sich geschlossenen Dichtlippe 31, die in etwa der Form der Brandsohle 4 folgt, wie dies in Fig. 2 zu sehen ist. In der Schnittdarstellung in Fig. 1 ist ein linker Dichtlippenteil 31l und ein rechter Dichtlippenteil 31r zu sehen. Beim Spritzvorgang liegen die Dichtlippenteile 31l, 31r unterhalb der Bereiche des Zwickklebers 3 an den Zwickeinschlägen 19 an. Die Spritzform 30 ist mit einer Einströmöffnung versehen, deren Austrittsmündung in dem Bereich zwischen den beiden Dichtlippenteilen 31l und 31r liegt.

Zum Einspritzen wird das Dichtmaterial 5 verflüssigt und mit einem Druck im Bereich von beispielsweise 3 bis 5 at (entspricht ca. 2,95 bar bis ca. 4,91 bar) in den von der Dichtlippe 31 eingeschlossenen Raum eingespritzt. Dabei dringt das flüssige Dichtmaterial auch in den Bereich zwischen der Brandsohle 4 und den losen Enden 21 des Zwickeinschlages 19. Durch den Spritzvorgang wird der gesamte Raum zwischen Brandsohle und zwischen der Dichtlippe 31 liegender Innenkontur der Spritzform mit dem Dichtungsmaterial ausgefüllt. Nach dem Aushärten des Dichtungsmaterials ist ein wasserdichter Abschluß im Bodenbereich des mit der Brandsohle 4 verbundenen Schuhschaftes 1 gegeben.

## Patentansprüche

1. Verfahren zur wasserundurchlässigen Abdichtung der Verbindungszone zwischen einem wasserdichten Schuhschaft mit Zwickeinschlag und einem Brandsohlenbereich des Schuhs mittels einer Schicht (5) aus verflüssigbarem, im abgehärteten Zustand wasserdichten Material, die mit Hilfe einer Spritzform auf die Verbindungszone aufgespritzt wird,
(a) wobei an die Unterseite des mit dem Brandsohlenbereich (4) verbundenen Schuhschaftes (1) eine Spritzform (30) angesetzt wird, die eine zum Brandsohlenbereich (4) hochstehende Dichlippenanordnung '(31) aufweist, die entlang der abzudichtenden Verbindungszone verläuft;
(b) wobei die Kontur der Dichtlippenanordnung (31) im wesentlichen der Kontur der Brandsohle entspricht;
(c) wobei der Zwickeinschlag des Schaftes einen losen Endbereich (21) aufweist, der nicht mit der Brandsohle (4) verklebt ist, so daß beim Aufspritzen der Schicht (5) die Spritzmasse der Schicht (5) in dem von der Dichtlippenanordnung (31) begrenzten Bereich zwischen den Zwickeinschlag des Schaftes und die Brandsohle dringen kann; und
(d) wobei auf die aufgespritzte Schicht (5) eine Laufsohle aufgebracht wird.

2. Verfahren nach Anspruch 1,
dadurch gekennzeichnet,
daß die Schicht aus Polyurethan besteht.

3. Verfahren nach Anspruch 1,
dadurch gekennzeichnet,
daß die Schicht aus Polyvinylchlorid besteht.

4. Verfahren nach Anspruch 1,
dadurch gekennzeichnet,
daß die Schicht aus Naturkautschuk besteht.

5. Verfahren nach Anspruch 1,
dadurch gekennzeichnet,
daß die Schicht aus Synthese-Kautschuk besteht.

6. Verfahren nach einem der Ansprüche 1 bis 5,
dadurch gekennzeichnet,
daß mindestens ein Teil des Schuhschaftes (1) aus wasserdichtem, dampfdurchlässigem Material (11) besteht oder mit solchem Material ausgekleidet ist.

7. Verfahren nach Anspruch 6,
dadurch gekennzeichnet,
daß das wasserdichte, dampfdurchlässige Material eine Folie aus gerecktem Polytetrafluoräthylen, eine Polyestermembran oder eine mikroporöse Polyurethan-Beschichtung ist.

8. Verfahren nach einem der Ansprüche 1 bis 7 zur Abdichtung eines Zwickeinschlages (19) bei klebegezwickten Schuhen,
dadurch gekennzeichnet,
daß der innere Randbereich (21) des Zwickeinschlages (19) unverklebt gehalten wird,
daß der unverklebte Randbereich (21) innerhalb des von der Dichtlippenanordnung (31) begrenzten Bereichs positioniert wird
und daß das Material der Schicht auf beiden Seiten des losen Randbereichs (21) aufgebracht wird.

## Claims

1. A method of sealing in water-impermeable manner the connecting region between a waterproof shoe upper with lasting allowance and an insole region of the shoe by means of a layer (5) of liquefiable material that is waterproof in the hardened state, said layer being injection-moulded onto the connecting region with the aid of an injection mould,
(a) with an injection mould (30) being applied to the bottom side of the shoe upper (1) connected to the insole region (4), said mould having a sealing lip assembly (31) upstanding towards the insole region (4) and extending along the connecting region to be sealed;
(b) the outline of the sealing lip assembly (31) corresponding substantially to the outline of the insole;
(c) the lasting allowance of the shoe upper having a loose end portion (21) that is not cemented to the insole (4), such that, upon moulding on the layer (5), the moulding material of the layer (5) can penetrate into the region located between the lasting allowance of the shoe upper and the insole; and
(d) an outsole being applied to the moulded on layer (5).

2. A method according to claim 1,
characterized in that the layer consists of polyurethane.

3. A method according to claim 1,
characterized in that the layer consists of polyvinyl chloride.

4. A method according to claim 1,
characterized in that the layer consists of natural rubber.

5. A method according to claim 1,
characterized in that the layer consists of synthetic rubber.

6. A method according to any one of claims 1 to 5,
characterized in that at least a part of the shoe upper (1) consists of waterproof, vapour-permeable material (11) or is lined with such material.

7. A method according to claim 6,
characterized in that said waterproof, vapour-permeable material is a film of expanded polytetrafluoroethylene, a polyester membrane or a microporous polyurethane coating.

8. A method according to any one of claims 1 to 7 for sealing a lasting allowance (19) in case of cementation-last shoes,
characterized in that the inner edge portion (21) of the lasting allowance (19) is kept uncemented,
that the uncemented edge portion (21) is positioned within the region confined by the sealing lip assembly (31),
and in that the material of the layer is applied on both sides of the loose edge portion (21).

## Revendications

1. Procédé pour rendre étanche à l'eau la zone de liaison entre une tige de chaussure étanche à l'eau à rempli de montage et un domaine de la semelle intérieure de la chaussure à l'aide d'une couche (5) constituée par une matière fluidifiable, étanche à l'eau à l'état durci, qui est appliquée par injection sur la zone de liaison à l'aide d'un moule à injection,
(a) où sur le côté inférieur de la tige de chaussure (1) reliée au domaine de la semelle intérieure (4) est appliqué un moule à injection (30) qui présente un agencement de lèvres d'étanchéité (31) surélevé en direction du domaine de la semelle intérieure (4) et qui s'étend le long de la zone de liaison à étanchéifier,
(b) où le contour de l'agencement de lèvres d'étanchéité (31) correspond sensiblement au contour de la semelle intérieure,
(c) où le rempli de montage de la tige comporte un domaine terminal (21) lâche qui n'est pas collé à la semelle intérieure (4) de sorte que, lors de l'application de la couche (5) par injection, la masse d'injection de la couche (5) peut pénétrer dans le domaine limité par l'agencement de lèvres d'étanchéité (31) entre le rempli de montage de la tige et la semelle intérieure ; et
(d) où une semelle d'usure est appliquée sur la couche (5) appliquée par injection.

2. Procédé selon la revendication 1, caractérisé en ce que la couche consiste en polyuréthanne.

3. Procédé selon la revendication 1, caractérisé en ce que la couche consiste en poly(chlorure de vinyle).

4. Procédé selon la revendication 1, caractérisé en ce que la couche consiste en caoutchouc naturel.

5. Procédé selon la revendication 1, caractérisé en ce que la couche consiste en caoutchouc synthétique.

6. Procédé selon l'une des revendications 1 à 5, caractérisé en ce qu'une partie au moins de la tige de chaussure (1) consiste en une matière (11) étanche à l'eau et perméable à la vapeur ou est revêtue d'une telle matière.

7. Procédé selon la revendication 6, caractérisé en ce que la matière étanche à l'eau et perméable à la vapeur est une feuille de polytétrafluoroéthylène étiré, une membrane de polyester ou un revêtement microporeux de polyuréthanne.

8. Procédé selon l'une des revendications 1 à 7 pour rendre étanche un rempli de montage (19) de chaussures montées par collage, caractérisé en ce que le domaine de bordure interne (21) du rempli de montage (19) est maintenu non collé, en ce que le domaine de bordure (21) non collé est positionné à l'intérieur du domaine limité par l'agencement de lèvres d'étanchéité (31) et en ce que la matière de la couche est appliquée des deux côtés du domaine de bordure (21) lâche.
